(19) Europäisches Patentamt
European Patent Office
Office européen des brevets

(11) **EP 3 425 782 A1**

(12) **EUROPEAN PATENT APPLICATION**

(43) Date of publication:
**09.01.2019 Bulletin 2019/02**

(21) Application number: **17460041.1**

(22) Date of filing: **06.07.2017**

(51) Int Cl.:
*H02M 1/12* (2006.01)     *H02M 1/15* (2006.01)
*H02J 3/18* (2006.01)     *H02J 9/04* (2006.01)
*H02J 9/06* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **ABB Schweiz AG
5400 Baden (CH)**

(72) Inventors:
• **Koska, Krzysztof
31-960 Krakow (PL)**
• **Ruszczyk, Adam
30-316 Krakow (PL)**

(74) Representative: **Chochorowska-Winiarska,
Krystyna
ABB Sp. z o. o.
ul. Zeganska 1
04-713 Warszawa (PL)**

(54) **A UPS SYSTEM OPERATING IN THE ECONOMICAL MODE**

(57) The present invention relates to a UPS (Uninterruptible Power Supply) system (1) operating in an economical mode (ECO-mode) for reduction of a capacitive current in an AC bypass circuit (8). The UPS system, according to the invention, is characterized in that the DC/AC converter circuit (5) is equipped with an AC output filter (11) in which LC circuit is formed by at least two capacitors or banks of capacitors C1 and C2 in series connected having a different values of capacitances and one of these capacitors C1 or C2 which has the lower value of the capacitance is bypassed by a bidirectional switch (12) connected in parallel to the capacitors or bank of capacitors which has lower value of the capacitance.

Fig. 3.

**Description**

The present invention relates to an UPS (Uninterruptible Power Supply) system operating in the economical mode (ECO-mode) for reduction of a capacitive current in an AC bypass circuit. During the ECO-mode operation, a load of the UPS system is supplied from a power source - by the AC bypass switch circuit.

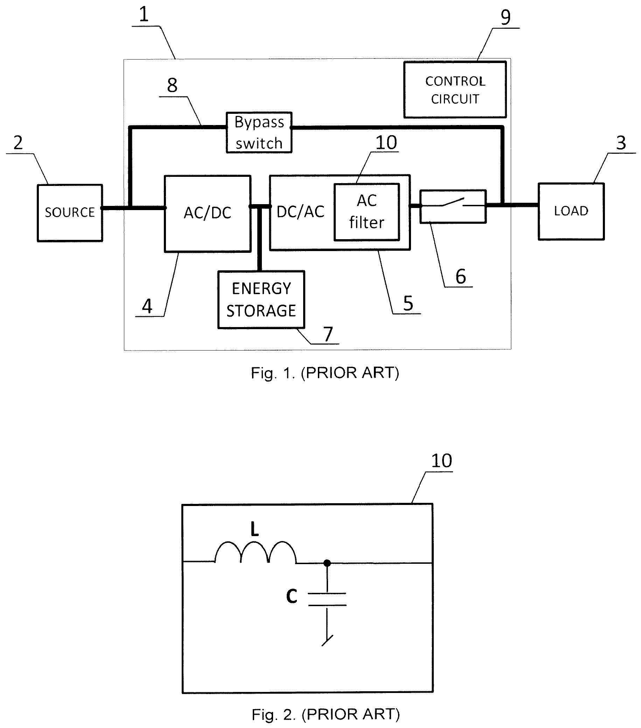

A commonly known an UPS system, indicated as 1 in fig.1, is connected in between an AC power source 2 and a load 3 and composed of an AC/DC converter circuit 4, DC/AC converter circuit 5 and AC contactor 6 electrically connected in series. Between the AC/DC converter circuit 4 and the DC/AC converter circuit 5 an energy storage circuit 7 is connected. AC/DC converter circuit 4, DC/AC converter circuit 5 and the energy storage circuit 7 are bypassed by an AC bypass switch circuit 8. During the ECO-mode operation, the AC bypass switch circuit 8 is closed and the DC/AC converter circuit 5 is not operating. The load 3 is supplied from the AC power source 2 and the AC bypass switch circuit 8 conducts a load current. UPS system 1 operating in the ECO-mode has higher efficiency in comparison to its operation, in so called double-conversion mode. During the double-conversion mode the AC bypass switch circuit 8 is open, AC contactor 6 is closed and the load 3 is supplied by the operating AC/DC converter circuit 4 and the DC/AC converter circuit 5. The operation mode of the UPS system 1 is selected by the UPS control circuit 9. The DC/AC converter circuit 5 comprises an AC output filter 10. The AC output filter 10 has LC topology. Its purpose is to filter an output voltage of the DC/AC converter circuit 5 in order to achieve AC sinusoidal voltage at the load 3 during double-conversion mode operation. During the ECO-mode operation, as DC/AC converter circuit 5 is not operating, and AC output filter 10 has substantially no function. In a case when AC contactor 6 is closed the AC output filter 10 is still connected to the same node as the load 3. Due to this fact, during ECO-mode operation, current of the AC bypass switch circuit 8 is a sum of the load 3 current and capacitive current of the AC output filter 10 of the DC/AC converter circuit 5. Capacitive current of the AC output filter 10 is a source of several problems:

• It is a source of increased conduction losses in the AC bypass switch circuit,

• It is a source of the reactive capacitive power, which may lead to reactive power overcompensation and power quality issues,

• It is a source of power quality problems due to generation of current oscillations in systems with distorted grid voltage,

• It can be a reason of spurious tripping of external protection devices, triggered by the inrush current of the AC output filter capacitors.

Presented above UPS system 1 could be found for example in the US patent US 6,295,215.

From US patent application US 2014/0368043 a method for reduction of a capacitive current of the AC output filter 10 is known. The method action is to keep the AC contactor 6 opened during ECO-mode operation. Thus the AC output filter 10 is not energized, and the capacitive current is not conducted by the AC bypass switch circuit 8. This solution has several drawbacks. The AC contactor 6 has to be fast in order to reduce transition time from the ECO-mode to the double-conversion mode of the UPS system. Because of that, expensive semiconductor based technology for AC contactor 6 is preferred (SCR, IGBT, IGCT), which must be rated to total load current.

The essence of the inventive UPS system which comprises an AC/DC converter circuit and a DC/AC converter circuit connected in series between a power source and a load wherein the AC/DC converter circuit and DC/AC converter circuit are bypassed by a AC bypass switch circuit, where the DC/AC converter circuit is equipped with a AC output filter being a LC circuit, is that the DC/AC converter circuit is equipped with an AC output filter in which the LC circuit is formed by at least two capacitors or banks of capacitors C1 and C2 in series connected having a different values of capacitance. One of these capacitors C1 or C2 which has the lower value of the capacitance is bypassed by a bidirectional switch connected in parallel to the capacitors or bank of capacitors which has lower value of the capacitance.

Preferably the bidirectional switch (12) is a mechanical switch, a solid-state switch or a hybrid switch.

Preferably the solid-state switch or a hybrid switch comprises a at least one of semiconductor valves: SCR, MOSFET, IGBT, IGCT or their combination.

Preferably the DC/AC converter circuit (5) is connected to the load (3) continuously both in the ECO-mode operation and the double-conversion mode.

The advantage of the invention is a very simple construction which allows for a reduction of the capacitive current in the UPS system. The bidirectional switch in the output AC filter is rated only to current of the capacitor C1 or C2, which has higher value of capacitance, what reduces cost of the bidirectional switch. Moreover the DC/AC converter circuit can be continuously connected to the load when the AC contactor is omitted or closed during the ECO-mode operation and double-conversion mode. As a result the faster transition of the UPS system from ECO-mode operation to the double-conversion mode operation can be achieved. In the UPS system, according to the present invention, the AC contactor can be slow mechanical switch, which can be closed both during ECO-mode and double conversion mode.

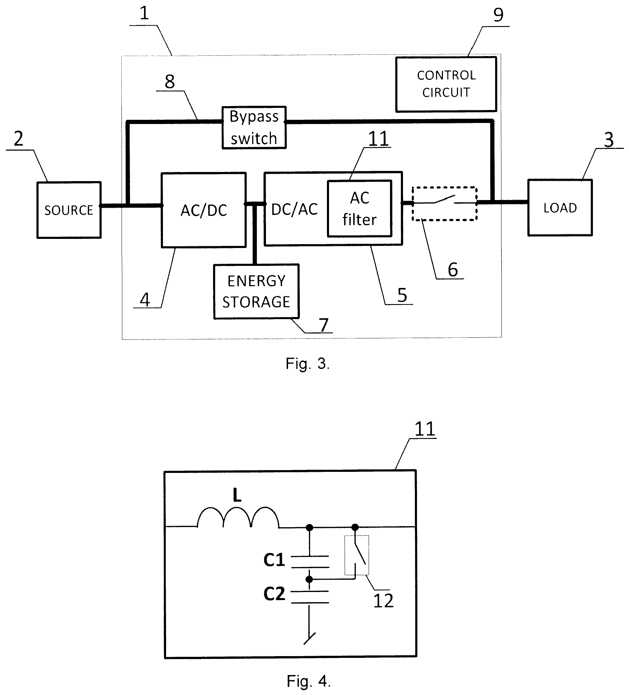

The subject of the invention is presented as an embodiment in the drawing where fig.1 shows a known from the prior art UPS system, fig.2 shows a detail from fig.1. Fig.3 shows the UPS system according to the present invention and fig. 4 shows a detail from fig.3.

In comparison to the known prior art a novel UPS system comprises a new output AC filter 11 (fig.4) instead of the know AC filter 10 (fig.2). The AC output filter 11 of the DC/AC converter circuit 5 has LC topology. Total capacitance of the AC output filter 11 is composed of two capacitors, C1 and C2. Capacitors C1 and C2 are connected in series. Preferably, values of the capacitance of C1 are C2 different. Capacitor C1 having the lower value of capacitance is bypassed by the bidirectional switch 12. The switch 12 may be a mechanical switch, solid-state switch as SCR, MOSFET, IGBT, IGCT or hybrid switch. In the system 1, according to the present invention, the AC contactor 6 can be omitted. When the UPS system 1 is operating in the double-conversion mode the switch 12 of the AC output filter 11 is closed and optional AC contactor 6 is closed. The capacitance value $C_{double\ conversion}$ connected in parallel to the load 3 is equal:

$$C_{double\ conversion} = C2 \qquad\qquad (1)$$

When the UPS system 1 is operating in the ECO-mode then optional AC contactor 6 is closed and the switch 12 of the AC output filter 11 is open. The capacitance value $C_{ECO\text{-}mode}$ connected in parallel to the load 3 is equal:

$$C_{ECO-mode} = \frac{C1 \cdot C2}{C1 + C2} \qquad\qquad (2)$$

The resultant value of $C_{Eco\text{-}mode}$ is smaller than the value of $C_{double\text{-}conversion}$, because of series connection of capacitors C1 and C2. Thus, capacitive current in the AC bypass circuit 8 of the UPS system 1 is reduced. The capacitance of the capacitor C1 can be selected in respect to the value of the capacitor C2 in that manner to achieve required reduction of capacitive current or to achieve filtering functionality together with supplying grid inductance. The value of capacitor C2 is selected by the designer of the LC output filter 11 in respect to the DC/AC converter circuit 5. Both capacitors C1 and C2 could be replaced by a series or parallel connected banks of capacitors what is not presented in the drawing.

The process of the reduction of capacitive current according to the present invention is realized in the following way:

When the UPS system 1 is working in the double-conversion mode (what is decided in the control circuit 9) then the switch 12 of the LC output filter 11 is closed.

When UPS system 1 is working in the ECO-mode (what is decided in the control circuit 9), then the switch 12 of the LC output filter 11 is opened.

**Claims**

1. The UPS system comprises an AC/DC converter circuit (4) and a DC/AC converter circuit (5) connected in series between a power source (2) and a load (3) wherein the AC/DC converter circuit (4) and DC/AC converter circuit (5) are bypassed by a AC bypass switch circuit (8), where the DC/AC converter circuit (5) is equipped with an AC output filter being an LC circuit, **characterized in that** the DC/AC converter circuit (5) is equipped with an AC output filter (11) in which the LC circuit is formed by at least two capacitors or banks of capacitors C1 and C2 in series connected having a different values of capacitances and one of these capacitors C1 or C2 which has the lower value of the capacitance is bypassed by a bidirectional switch (12) connected in parallel to the capacitors or bank of capacitors which has lower value of the capacitance.

2. The UPS system according to claim 1, **characterized in that** the bidirectional switch (12) is a mechanical switch, a solid-state switch or a hybrid switch.

3. The UPS system according to claim 2, **characterized in that** the solid-state switch or a hybrid switch comprises a at least one of semiconductor valves SCR, MOSFET, IGBT, IGCT or their combination.

4. The UPS system according to claim 1, **characterized in that** DC/AC converter circuit (5) is connected to the load (3) continuously both in the ECO-mode operation and in the double-conversion mode.

Fig. 1. (PRIOR ART)

Fig. 2. (PRIOR ART)

Fig. 3.

Fig. 4.

Europäisches
Patentamt

European
Patent Office

Office européen
des brevets

## EUROPEAN SEARCH REPORT

Application Number

EP 17 46 0041

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2017/163088 A1 (TOYODA MASARU [JP]) 8 June 2017 (2017-06-08) * paragraphs [0049], [0055]; figure 1 * ----- | 1-4 | INV. H02M1/12 H02M1/15 H02J3/18 H02J9/04 H02J9/06 |
| Y | US 2008/278005 A1 (CHAMBON PATRICK [FR]) 13 November 2008 (2008-11-13) * paragraphs [0079], [0097], [0099]; figure 1 * ----- | 1-4 | |
| Y | US 2005/162219 A1 (ADAN ALBERTO O [JP]) 28 July 2005 (2005-07-28) * paragraphs [0084], [0085]; figures 1-3 * ----- | 2-4 | |

TECHNICAL FIELDS
SEARCHED       (IPC)

H02M
H02J

The present search report has been drawn up for all claims

| Place of search | Date of completion of the search | Examiner |
|---|---|---|
| The Hague | 16 January 2018 | Kanelis, Konstantin |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 17 46 0041

This annex lists the patent family members relating to the patent documents cited in the above-mentioned European search report.
The members are as contained in the European Patent Office EDP file on
The European Patent Office is in no way liable for these particulars which are merely given for the purpose of information.

16-01-2018

| Patent document cited in search report | | Publication date | Patent family member(s) | | Publication date |
|---|---|---|---|---|---|
| US 2017163088 | A1 | 08-06-2017 | CN | 106471704 A | 01-03-2017 |
| | | | JP | 6190059 B2 | 30-08-2017 |
| | | | JP | WO2015198447 A1 | 20-04-2017 |
| | | | TW | 201601419 A | 01-01-2016 |
| | | | US | 2017163088 A1 | 08-06-2017 |
| | | | WO | 2015198447 A1 | 30-12-2015 |
| US 2008278005 | A1 | 13-11-2008 | AT | 460001 T | 15-03-2010 |
| | | | DK | 1990893 T3 | 25-05-2010 |
| | | | EP | 1990893 A1 | 12-11-2008 |
| | | | ES | 2339077 T3 | 14-05-2010 |
| | | | FR | 2916100 A1 | 14-11-2008 |
| | | | US | 2008278005 A1 | 13-11-2008 |
| US 2005162219 | A1 | 28-07-2005 | CN | 1649261 A | 03-08-2005 |
| | | | JP | 4347074 B2 | 21-10-2009 |
| | | | JP | 2005217514 A | 11-08-2005 |
| | | | TW | I268045 B | 01-12-2006 |
| | | | US | 2005162219 A1 | 28-07-2005 |

EPO FORM P0459

For more details about this annex : see Official Journal of the European Patent Office, No. 12/82

**REFERENCES CITED IN THE DESCRIPTION**

**Patent documents cited in the description**

- US 6295215 B

- US 20140368043 A